# EUROPEAN PATENT APPLICATION

(11) **EP 4 015 489 A1**
(43) Date of publication of application: **22.06.2022**
(21) Application number: 20216180.8
(22) Date of filing: 21.12.2020
(51) Int. Cl.: C05B 7/00, C05C 1/02, C05C 3/00, C05G 3/30, C05G 3/90

(54) **IMPROVED AMMONIUM-BASED COMPOSITION AND METHOD FOR THE MANUFACTURE THEREOF**

(71) Applicant: Yara International ASA, 0277 Oslo (NO)
(72) Inventor: van Belzen, Ruud, 4541 HJ Sluiskil Terneuzen (NL); Colpaert, Filip, 9052 Zwijnaarde (BE); Paul, van Elslande, 4541 HJ Sluiskil Terneuzen (NL); Van de Walle, Tom, 9180 Moerbeke-Waas (BE)
(74) Representative: De Clercq & Partners

(57) **Abstract**

The invention relates to a solid, particulate, ammonium-based composition comprising an ammonium salt and a nitrification inhibitor, wherein the ammonium-based composition is further characterized in that one or more of the following measures applies :
a) it comprises 5.0 weight% or less, relative to the total weight of the composition, of an acidic compound selected from the group of organic acids, boric acid, sulphuric acid, nitric acid, and/or mixtures thereof;
b) an anticaking and/or moisture repellent coating comprising a wax, a phosphate ester and an amine is applied onto the ammonium-based composition.

The invention further relates to a method for the manufacture of a solid, particulate ammonium-based composition comprising an ammonium salt and a nitrification inhibitor, as well as to a composition of kit of parts comprising :
a) it comprises 5.0 weight% or less, relative to the total weight of the composition, of an acidic compound selected from the group of organic acids, boric acid, sulphuric acid, nitric acid, and/or mixtures thereof;
b) an anticaking and/or moisture repellent coating comprising a wax, a phosphate ester and an amine is applied onto the ammonium-based composition.

## Description

### Field of the invention

This invention relates to a homogeneous, solid, particulate, ammonium based composition, comprising a nitrification inhibitor, in particular 3,4-dimethylpyrazole or a derivative thereof, more in particular 3,4-dimethylpyrazole phosphate (DMPP). The invention further relates to a method for the manufacture of a homogeneous, solid, particulate ammonium-based composition comprising an ammonium salt and a nitrification inhibitor, in particular 3,4-dimethylpyrazole or a derivative thereof, more in particular 3,4-dimethylpyrazole phosphate (DMPP) or 3,4-dimethylpyrazole-succinic acid (DMPSA). The product is in particular suitable as a fertilizer.

### Background of the invention

Nitrogen is a basic element for any living system, such as plants or crops, as a constituent of protein. Soils contain nitrogen naturally, mostly in the form of nitrate (NO₃⁻), that crops can absorb to fuel their growth. However, the nitrogen content of soils is usually too low to ensure an optimal growth and yield, so farmers often supply additional nitrogen to crops in the form of fertilizer compositions. Nitrogen can be supplied in three main forms: urea, which cannot be absorbed directly by the crops, but needs to be decomposed by soil organisms, nitrate ions (NO₃⁻), which can be directly absorbed by the roots of crops, and ammonium ions (NH₄⁺). Ammonium may be absorbed directly by roots although at a much lower rate than nitrate ions. Ammonium groups may also be oxidized to nitrate in a two-stage process called nitrification: first, ammonium is converted to nitrite (NO₂⁻), and nitrite is converted to nitrate. This conversion is carried out by nitrifying organisms, with for example *Nitrosomas* bacteria performing the first step, and *Nitrobacter* subsequently performing the second step and conversion of the nitrite to nitrate.

Ammonium ions are positively charged and therefore are easily fixed by negatively charged materials, such as clays, which are abundantly present in soils. It is said that ammonium ions have a low mobility in soils. On the other hand, negatively charged nitrate ions are not so well retained by soil components, and may leach from the soil, in particular in case of heavy rainfall.

When applying ammonium-based fertilizers to soils, there is a need a to regulate the conversion of ammonium into nitrate to avoid nitrogen losses due to nitrate leaching and avoid nitrous oxide (emissions). Compounds that slow down the nitrification process, so-called nitrification inhibitors, have been developed and may be applied to soils at the same time as ammonium-based fertilizers. Alternatively, the nitrification inhibitors may be added directly to the fertilizer composition.

There are a limited number of compounds recognized commercially as nitrification inhibitors. Examples of nitrification inhibitors include, but are not limited to, dicyandiamide (DCD), 2-chloro-6-trichloromethylpyridine (nitrapyrin), dimethylpyrazole (DMP)-based compounds, such as 3,4-dimethylpyrazole phosphate (DMPP), 3,4-dimethylpyrazole-succinic acid (DMPSA), 3-methylpyrazole (MP); 1-H-1,2,4-triazole (TZ); 3-methylpyrazole-1-carboxamide (CMP); 4-amino-1,2,4-triazole (AT, ATC); 3-amino-1,2,4-triazole; 2-cyanimino-4-hydroxy-6- methylpyrimidine (CP); 2-ethylpyridine; ammonium thiosulfate (ATS); sodium thiosulfate (ST); thiophosphoryl triamide; thiourea (TU); guanylthiourea (GTU); ammonium polycarboxylate; ethylene urea; hydroquinone; phenylacetylene; phenylphosphorodiamidate; neemcake; calcium carbide; 5-ethoxy-3-trichloromethyl-1,2,4-thiadiazol (etridiazol; terraole); 2-amino-4-chloro-6- methylpyrimidine (AM); 1-mercapto-1,2,4-triazole (MT); 2-mercaptobenzothiazole (MBT); 2-sulfanilamidothiazole (ST); 5-amino-1,2,4-thiadiazole; 2,4-diamino-6-trichloromethyl-s-triazine (CL-1580); N-2,5-dichlorophenyl succinanilic acid (DCS); nitroaniline, and chloroaniline.

The inventors have now been confronted with the problem that the nitrification inhibitor, in particular 3,4-dimethylpyrazole or a derivative thereof, is not stable when in contact with an ammonium-containing material, and decomposes over time.

### Summary of the invention

Surprisingly, the inventors now found that the stability of the nitrification inhibitor, in particular 3,4-dimethylpyrazole or a derivative thereof, particularly when in contact with an ammonium containing material, can be greatly improved when one or more measures, alone or in combination, are applied.

In its broadest concept, the invention is concerned with a homogeneous, solid, particulate, ammonium-based composition comprising an ammonium salt, a nitrification inhibitor, in particular 3,4-dimethylpyrazole or a derivative thereof, wherein the ammonium-based composition is characterized in that one or more of the following measures applies:
a) it comprises 0.001 to 5.0 weight% or less, relative to the total weight of the composition, of an acidic compound selected from the group of organic acids, boric acid, sulphuric acid, nitric acid, and/or mixtures thereof; and/or
b) an anticaking and/or moisture repellent coating comprising a wax, a phosphate ester, and an amine, is applied onto the particulate ammonium-based composition.

With regard to the measures, without being bound by theory, it is hypothesized that the acidic compound ensures that the environment of the nitrification inhibitor is always acidic and thus increase its stability. For example, it is known that 3,4-dimethylpyrazole is not very stable as such over extended storage time, but it is much more stable when present as a salt, such as DMPP.

Moreover, without being bound by theory, it is hypothesized that the addition of an anticaking and/or moisture repellent coating slows down the degradation of the nitrification inhibitor due to the fact that the anticaking and/or moisture repellent coating slows down the moisture uptake.

By applying one or more of these measures, alone or in combination, to the ammonium-based composition comprising an ammonium salt and a nitrification inhibitor, the stability of the nitrification inhibitor is greatly improved, leading, among others, to lower nitrous oxide emissions and lower loss of nitrates due to leaching, even when the nitrification inhibitor was added to the ammonium-based composition a long time, e.g. several weeks, before the actual application on the field as a fertilizer.

The claimed measures can be applied independently from each other or in any combination, wherein certain combinations can be more preferred than others depending on the actual situation of the composition according to the invention, such as storage temperature (low, high), application climate (tropical, arid), etc.. The invention will now be described in more detail.

### Figures

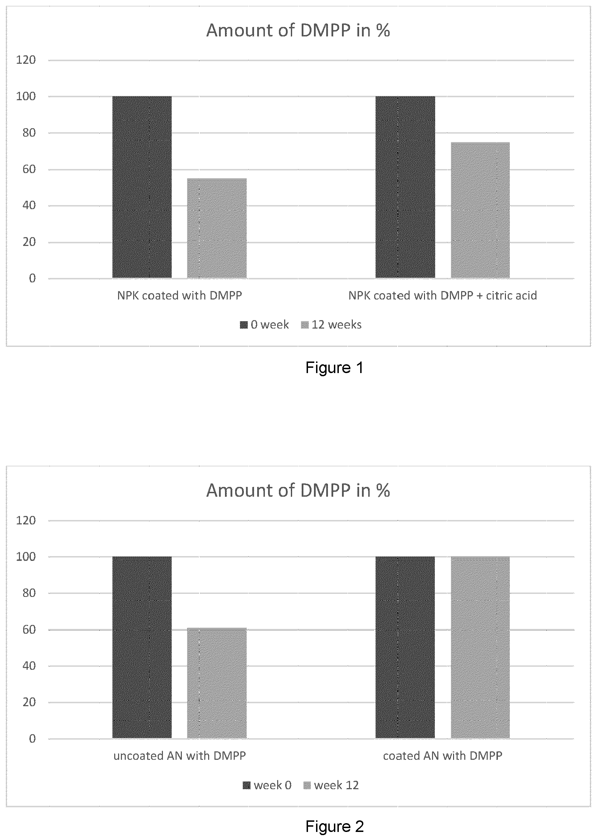

Figure 1 represents the amount of DMPP remaining on DMPP-coated NPK particles at 0 and 12 weeks of storage. Left: reference sample, without stabilizing measures; right: DMPP-coated NPK particles further coated with citric acid, according to an embodiment of the present application.
Figure 2 represents the amount of DMPP remaining in an ammonium nitrate-based particulate composition at 0 and 12 weeks of storage. Left: reference sample, without stabilizing measures; right: DMPP containing ammonium nitrate based particles coated with a coating agent, according to an embodiment of the present application.

### Description of the invention

In its broadest concept, the invention is concerned with a solid, particulate, ammonium-based composition comprising an ammonium salt and a nitrification inhibitor.

Ammonium salts are well known in the field of fertilizers. They provide a source nitrogen to the soil, that may either be absorbed as such by the roots of crops or be absorbed as nitrate ions after a nitrification process.

In one embodiment, the ammonium salt is selected from the group of ammonium nitrate, ammonium phosphate, or ammonium sulphate. Ammonium nitrate and ammonium phosphate are among the most common ammonium salts used in fertilizer. Ammonium nitrate provides nitrogen under two forms, ammonium ions and nitrate ions. Nitrate ions may be absorbed as such by the crops, and are considered as a fast-acting source of nitrogen, and the ammonium ions provide a nitrogen source with a longer impact in time.

Phosphorus is another primary nutrient required by crops, so combining both nutrients in a single salt is especially advantageous as it reduces the workload for the farmer. Ammonium phosphate containing compounds include mono-ammonium phosphate (MAP), with the chemical formula (NH₄)H₂PO₄, and di-ammonium phosphate (DAP), with the chemical formula (NH₄)₂HPO₄.

Sulphur is a secondary nutrient, so ammonium sulphate salts are also interesting from an agronomical point of view to supply two nutrients to the crops.

In one embodiment, the solid, particulate, ammonium-based composition comprises 40 to 90 weight% of an ammonium salt selected from the group of ammonium nitrate, ammonium phosphate, or ammonium sulphate, with weight% relative to the total weight of the composition.

In one embodiment, the solid, particulate, ammonium-based composition comprises 40 to 90 weight%, in particular 40 to 85 weight%, more in particular 45 to 85 weight%, even more in particular 45 to 80 weight%, even more in particular 50 to 80 weight%, even more in particular 55 to 80 weight%, even more in particular 60 to 80 weight%, of an ammonium salt, with weight% relative to the total weight of the composition.

In one embodiment, the solid, particulate, ammonium-based composition comprises ammonium nitrate and ammonium sulphate. It is known to add ammonium sulphate to a melt of ammonium nitrate to obtain solid particles of ammonium sulphate nitrate. Since ammonium sulphate is an inorganic material, it reduces the explosive risk of the ammonium nitrate-based composition and reduces the need for an inorganic filler to decrease the explosive risk. Ammonium sulphate has the advantage compared to other inorganic filler that its components, ammonium and sulphate ions, are nutrients required by crops. Therefore its presence does not decrease the agronomical value of the product as other filler may. These particles have the advantage of providing two different nutrients, nitrogen and sulphur, to crops. When the composition comprises ammonium nitrate and ammonium sulphate, the inorganic filler may be present at a level of less than 10 weight%, in particular between 1 and 10 weight%. In one embodiment, the composition comprises 30 to 50 weight% of ammonium nitrate and 30 to 60 weight% of ammonium sulphate, with weight% relative to the total weight of the composition. In one embodiment, the composition comprises 35 to 45 weight% of ammonium nitrate and 35 to 55 weight% of ammonium sulphate, with weight% relative to the total weight of the composition. In one embodiment, the composition comprises 35 to 45 weight% of ammonium nitrate and 40 to 55 weight% of ammonium sulphate, with weight% relative to the total weight of the composition. In one embodiment, the composition comprises 30 to 50 weight% of ammonium nitrate, 30 to 60 weight% of ammonium sulphate and 1 to 10 weight% of an inorganic filler, in particular gypsum, with weight% relative to the total weight of the composition. In one embodiment, the composition comprises 30 to 50 weight% of ammonium nitrate, 30 to 60 weight% of ammonium sulphate and 1 to 8 weight% of an inorganic filler, in particular gypsum, with weight% relative to the total weight of the composition. In one embodiment, the composition comprises 30 to 50 weight% of ammonium nitrate, 30 to 60 weight% of ammonium sulphate and 1 to 6 weight% of an inorganic filler, in particular gypsum, with weight% relative to the total weight of the composition. In one embodiment, the composition comprises 35 to 45 weight% of ammonium nitrate, 45 to 55 weight% of ammonium sulphate and 1 to 3 weight% of gypsum, with weight% relative to the total weight of the composition.

The solid, particulate, ammonium-based composition may be obtained by a number of means known in the art. For example, it may be obtained by transforming an ammonium-based melt into a solid, particulate composition. Ammonium-based melt may be obtained by reacting a stream of ammonia with an acid, in particular an inorganic acid, such as nitric acid, phosphoric acid, and/or sulphuric acid. The ammonium-based melt may be transformed into a solid, particulate composition by processing the melt in apparatus such as a fluidized bed, a pan granulator, a drum granulator, a prilling tower, a spherodizer, a pugmill or a pastillizer.

In one embodiment, the solid, particulate, ammonium-based composition comprises an inorganic filler, in particular a calcium-containing inorganic filler. In one embodiment, the solid, particulate composition comprises ammonium sulphate and/or an inorganic filler, in particular a calcium-containing inorganic filler. For fertilizer applications, ammonium nitrate is never sold at high concentrations or even pure because it is also highly explosive. So a filler, often an inorganic filler, is added to ammonium nitrate-based compositions to eliminate that risk. The filler may also have additional purposes: it may contain elements needed by the plant, thus transforming the single nutrient-containing ammonium nitrate into a multi-nutrient fertilizer; and it may also improve the physical properties of the ammonium nitrate-based material, such as porosity and particle strength. As discussed above, solid, particulate ammonium nitrate has a rather low particle strength, meaning that the particles may not tolerate repeated handling operations.

In one embodiment, the calcium-containing inorganic filler is selected from the group of dolomite, gypsum, lime, limestone and/or mixtures thereof. Calcium-containing fillers such as dolomite, gypsum, limestone are widely used as fillers in ammonium nitrate-based fertilizer compositions. These materials are cheap and available in large scale. They do not react very much with ammonium nitrate, and significantly lower the explosive risk of ammonium nitrate-based compositions. Kaolin clays, a silicate-alumina material with the general formula AlₓSi_{y}Oₘ(OH)ₙ, where x, y, m and n are positive integers, may also be used as fillers in ammonium nitrate-based solid, particulate compositions.

In one embodiment, the solid, particulate, ammonium-based composition comprises 10 to 30 weight%, in particular 12 to 25 weight%, more in particular 15 to 25 weight%, even more in particular 16 to 25 weight% of the inorganic filler, with weight% relative to the total weight of the composition. It was found that an amount between 10 to 30 weight% of filler was satisfying to reduce the explosive risk of the composition without decreasing the agronomical value thereof.

In one embodiment, the solid, particulate, ammonium-based composition comprises 21 weight% of dolomite, with weight% relative to the total weight of the composition. In one embodiment, the solid, particulate, ammonium-based composition comprises 24.5 weight% of gypsum and 3 weight% of dolomite, with weight% relative to the total weight of the composition. In one embodiment, the solid, particulate, ammonium-based composition comprises 15 weight% of gypsum and 5 weight% of dolomite, with weight% relative to the total weight of the composition.

In one embodiment, the ammonium-based composition comprises a potassium salt. Potassium is the third primary nutrient with nitrogen and phosphorus. It may be an advantage to provide two or three primary nutrients in a single particulate composition to provide the crops with all the primary nutrients they require. Fertilizer particles comprising all three primary nutrients are called NPK nutrients. They may be obtained by particulating a melt comprising an ammonium phosphate salt, such as MAP or DAP, and a potassium salt, such as potassium chloride or potassium sulphate. Particles obtained from a melt comprising an ammonium salt and potassium sulphate, are also called NPKS fertilizer.

In one embodiment, the nitrification inhibitor is selected from the group of dicyandiamide (DCD), 2-chloro-6-trichloromethylpyridine (nitrapyrin), 3,4-dimethylpyrazole (DMP)-based compounds, such as 3,4-dimethylpyrazole phosphate (DMPP), 3,4-dimethylpyrazole-succinic acid (DMPSA), 3-methylpyrazole (MP); 1-H-1,2,4-triazole (TZ); 3-methylpyrazole-1-carboxamide (CMP); 4-amino-1,2,4-triazole (AT, ATC); 3-amino-1,2,4-triazole; 2-cyanimino-4-hydroxy-6- methylpyrimidine (CP); 2-ethylpyridine; ammonium thiosulfate (ATS); sodium thiosulfate (ST); thiophosphoryl triamide; thiourea (TU); guanylthiourea (GTU); ammonium polycarboxylate; ethylene urea; hydroquinone; phenylacetylene; phenylphosphorodiamidate; neemcake; calcium carbide; 5-ethoxy-3-trichloromethyl-1,2,4-thiadiazol (etridiazol; terraole); 2-amino-4-chloro-6- methylpyrimidine (AM); 1-mercapto-1,2,4-triazole (MT); 2-mercaptobenzothiazole (MBT); 2-sulfanilamidothiazole (ST); 5-amino-1,2,4-thiadiazole; 2,4-diamino-6-trichloromethyl-s-triazine (CL-1580); N-2,5-dichlorophenyl succinanilic acid (DCS); nitroaniline, and chloroaniline.

In one embodiment, the nitrification inhibitor is selected from the group of 3,4-dimethylpyrazole (DMP) or a 3,4-dimethylpyrazole (DMP) derivative, such as 3,4-dimethylpyrazole salts, for example 3,4-dimethylpyrazole phosphate (DMPP), 3,4-dimethylpyrazole-succinic acid (DMPSA), or 3-methylpyrazole (MP). As used herein, a DMP derivative may refer to the salt of DMP with any organic or inorganic acid, or a compound containing the DMP moiety covalently bound to another organic molecule, such as DMPSA, wherein the DMP moiety is covalently bound to the succinic acid moiety. An isomer of 3,4-dimethylpyrazole, such as 4,5-dimethylpyrazole, may also be considered a derivative of the 3,4-dimethlypyrazole, since it can be assumed that the two molecules reduce the nitrification rate by the same mechanism.

In one embodiment, the nitrification inhibitor is DMPP.

In one embodiment, the nitrification inhibitor, in particular 3,4-dimethylpyrazole (DMP) or a 3,4-dimethylpyrazole (DMP) derivative, more in particular DMPP or DMPSA, is present in the ammonium-based composition at a level between 0.0001 and 1.0% weight%, in particular between 0.001 and 1.0 weight%, more in particular between 0.01 and 1.0 weight%, even more in particular 0.02 and 1.0 weight%, even more in particular 0.02 and 0.8 weight%, even more in particular between 0.02 and 0.5% weight%, even more in particular between 0.02 and 0.2 weight%, with weight% relative to the total weight of the composition.

The nitrification inhibitor, in particular DMP, or a DMP-derivative, may be applied to the ammonium-based composition comprising the ammonium-based particles by common coating and blending techniques, well known to the skilled person, such as spray-coating and drum-coating.

In one embodiment, the composition comprises one of magnesium nitrate, aluminium sulphate and/or mixtures thereof. It may be an advantage to add an additive, such as magnesium nitrate and aluminum sulphate, to improve the properties of the solid, particulate, ammonium-based composition comprising an ammonium salt and a nitrification inhibitor, in particular improve the hardness of the particles.

In one embodiment, the solid, particulate, ammonium-based composition comprises 0.1 to 5.0 weight%, in particular 0.1 to 4.0 weight%, more in particular 0.1 to 3.0 weight%, even more in particular 0.1 to 2.0 weight% of one of magnesium nitrate, aluminium sulphate and/or mixtures thereof, with weight% relative to the total weight of the composition. It was found that an amount between 0.1 and 5.0 weight% of additives, such as magnesium nitrate and aluminum sulphate, was satisfying to achieve the desired effect, such as the increased hardness. Magnesium and nitrate are crop nutrients, so for agricultural applications, their presence is not an obstacle, but rather a benefit. However, aluminum may be toxic to some crops, so it may be desirable to limit its amount.

In the first aspect of the present invention, the solid, particulate, ammonium-based composition is characterized in that one or more of the following measures applies:
a) it comprises 0.001 to 5.0 weight% or less, relative to the total weight of the composition, of a compound selected from the group of organic acids, boric acid, sulphuric acid, nitric acid, and/or mixtures thereof; or
b) an anticaking and/or moisture repellent coating comprising a wax, a phosphate ester, and an amine, is applied onto the particulate ammonium-based composition.

Nitrification inhibitors, in particular DMP or DMP-derivatives, are small organic or inorganic molecules, and as such are subject to decomposition over time when present in solid compositions with other elements or organic or inorganic compounds. The decomposition may be due to interactions with the other compounds present in the composition, or interactions with the ambient conditions such as temperature and/or moisture. It may be an interest for fertilizer producers to increase the lifetime of nitrification inhibitors in ammonium-based compositions to facilitate its storage and transport, and/or ensure performance of the inhibitors when the ammonium-based composition is applied to soils.

It was found that it was possible to increase the stability of a nitrification inhibitor, in particular wherein the nitrification inhibitor is DMP or a DMP derivative, with two different features.

First, it was observed that the stability of a nitrification inhibitor, in particular DMP or a DMP derivative such as DMPP or DMPSA, was increased by adding 0.001 to 5.0 weight% or less, relative to the total weight of the ammonium-based composition, of an acidic compound selected from the group of organic acids, boric acid, sulphuric acid, nitric acid and/or mixtures thereof. Without being bound by theory, it is thought that it may be important to keep the nitrification inhibitor in an acidic environment to prevent its degradation or maintain its level in the ammonium-based composition. In particular, it is known that DMP is a basic compound, which may be volatile when in neutral form. It is known to add DMP in the form of DMP salts, such as DMPP, but it was found that adding an acidic compound to the composition, in addition to or instead of adding the DMP as DMP salts, further increased its stability.

In one embodiment, the one or more acidic compounds is selected from the group of organic acids, boric acid, sulphuric acid, and/or nitric acid.

In one embodiment, the group of organic acids comprises organic molecules comprising one carboxylic acid functional group.

In one embodiment, the group of organic acids comprises organic molecules comprising two carboxylic acid functional groups.

In one embodiment, the group of organic acids comprises citric acid, isocitric acid, aconitic acid, propane-1,2,3-tricarboxylic acid, tartaric acid, malic acid, maleic acid, fumaric acid, and mixtures thereof.

In one embodiment, the solid, particulate, ammonium-based composition comprises 0.01 to 5.0 weight%, in particular 0.01 to 4.0 weight%, more in particular 0.01 to 3.0 weight, even more in particular 0.02 to 2.0 weight%, even more in particular 0.02 to 1.0 weight%, even more in particular 0.05 to 1.0 weight%, of the acidic compound selected from the group of organic acids, boric acid, sulphuric acid, nitric acid and/or mixtures thereof, with weight% relative to the total weight of the composition. The amount of the stabilizer, i.e. the acidic compound, may be modulated depending on factors such as the nature of the nitrification inhibitor used in the composition, the desired duration of the stabilizing effect, or local regulations.

The acidic compound selected from the group of organic acids, boric acid, sulphuric acid, nitric acid and/or mixtures thereof, may be introduced in the solid, particulate, ammonium-based composition according to several methods well known in the art. First, the acidic compound may be introduced during the manufacture of the solid, particulate, ammonium-based composition, for example, the acidic compound may be added in an ammonium-based melt, e.g. a melt of ammonium nitrate, before the melt is transformed into a solid, particulate composition. The acidic compound may be added as a solid, or in a solution or suspension using water or an organic solvent. The addition as an aqueous solution or a solid may be preferred since the organic solvent may react with other compounds present in the melt. Secondly, the acidic compound may be added to the manufactured solid, particulate, ammonium-based composition by a coating step. Here again, the acidic compound may be added as a dry coating, or via a solution or suspension in a solvent, such as water or an organic solvent. For a coating application, an aqueous solution or suspension may not be preferred since it may dissolve some of the particles and lower the quality of the particulate composition.

The acidic compound and the nitrification inhibitor may be added at the same stage of the manufacturing process or at different stages. Adding the stabilizer and inhibitor at the same stage, for example adding both as dry coating, may ensure an intimate contact between the two compounds, which may promote the effectiveness of the stabilizer. However, it may be that the stabilizer and inhibitor have different stability requirements that prevent a simultaneous, or quasi-simultaneous addition to the solid, particulate composition. For example, it may be preferred to add one of the inhibitor or the stabilizer in the ammonium melt to ensure a good distribution within the particle, but the other one of the inhibitor or the stabilizer may not tolerate the temperatures of the melt, in which case, it may be better to add it as a coating.

In one embodiment, the weight ratio of nitrification inhibitor to the acidic compound in the compositions according to the invention ranges from 1:20 to 10:1, in particular from 1:10 to 5:1, more in particular from 1:5 to 2:1.

Secondly, it was found that applying an anticaking and/or moisture repellent coating comprising a wax, a phosphate ester, and an amine, onto the solid, particulate ammonium-based composition also increased the stability of the nitrification inhibitor. Coatings, in particular anticaking and/or moisture repellent coatings, are used in the fertilizer industry to protect fertilizer particles and improve their storage and transport ability. It was found that when the particles contain a nitrification inhibitor, the stability of the inhibitor was increased when the particles were coated with an anticaking and/or moisture repellent coating.

In one embodiment, the anticaking and/or moisture repellent coating comprises a wax, an alkyl phosphate ester and an amine.

In one embodiment, the anticaking and/or moisture repellent coating comprises a petroleum wax, a phosphate ester and an amine.

In one embodiment, the anticaking and/or moisture repellent coating comprises a wax, a phosphate ester and a mixture of tallow fat C16-C18 amines.

In one embodiment, the anticaking and/or moisture repellent coating comprises a petroleum wax, an alkyl phosphate ester and a mixture of tallow fat C16-C18 amines.

In one embodiment, the anticaking and/or moisture repellent coating comprises 70 to 95 weight of a wax, in particular a petroleum wax, 1 to 15 weight% of a phosphate ester, in particular an alkyl phosphate ester, and 1 to 15 weight% of an amine, in particular a mixture of tallow fat C16-C18 amines, with weight% relative to the total weight of the coating composition.

In one embodiment, the anticaking and/or moisture repellent coating comprises a wax, an oil, a resin, and optionally a polymer.

In one embodiment, the anticaking and/or moisture repellent coating comprises 10 to 50 weight% of wax, 40 to 90 weight% of a mineral oil, 1 to 15 weight% of a resin being mineral oil-soluble and miscible with wax and mineral oil, and 0 to 1.0 weight% of a viscoelastic elastomer selected from the group of polyisobutylene and styrene-isoprene-styrene block copolymer which is soluble in mineral oil and has an average molecular weight of 30.000 to 5.000.000, with weight% relative to the total weight of the coating composition.

In one embodiment, the anticaking and/or moisture repellent coating comprises 40 to 60 weight% of wax, 30 to 55 weight% of a mineral oil, 1 to 15 weight% of a resin being mineral oil-soluble and miscible with wax and mineral oil, and 0 to 1.0 weight% of a viscoelastic elastomer, with weight% relative to the total weight of the coating composition.

In one embodiment, the anticaking and/or moisture repellent coating comprises an oil, in particular petroleum distillates, and a fatty alkyl amine. In one embodiment, the anticaking and/or moisture repellent coating comprises 25 to 80 weight% of an oil, in particular a petroleum distillates, and 10 to 20 weight% of a fatty alkyl amine, with weight% relative to the total weight of the coating composition.

In one embodiment, the solid, particulate ammonium-based composition comprises 0.01 to 2.0 weight%, such as 0.01 to 1.0 weight%, 0.02 to 1.0 weight%, 0.02 to 0.9 weight%, 0.03 to 0.9 weight%, 0.03 to 0.8 weight%, of the anticaking and/or moisture repellent coating comprising a wax, a phosphate ester, and an amine, with weight% relative to the total weight of the composition. It may be an advantage to keep the amount of coating below 2.0 weight% of the total composition, otherwise the coated composition may become too sticky which is not desirable. A sticky particle is difficult to handle and distribute in the fields. It was observed that a minimum amount of 0.01 weight% of the total composition was necessary to achieve an anticaking and/or moisture repellent effect.

The present disclosure also covers embodiments where both the above measures a), and b) are combined.

In one embodiment, the solid, particulate ammonium-based composition has a median particle size, D50, comprised between 1.0 and 6.0 mm, in particular between 2.0 and 4.0 mm, as determined by mesh sieve screening. These sizes are preferred for fertilizer particles because a lot of the equipment used by farmers, such as spreaders, are configured to work with particles of these sizes.

The present disclosure also discloses a method for the manufacture of a solid, particulate ammonium-based composition comprising an ammonium salt, a nitrification inhibitor and 0.001 to 5.0 weight% or less, relative to the total weight of the composition, of an acidic compound selected from the group of organic acids, boric acid, sulphuric acid, nitric acid, and/or mixtures thereof.

In particular, the invention relates to a method for the manufacture of a homogeneous, solid, particulate, ammonium-based composition according to the invention, the method comprising the steps of:
1) providing an ammonium-based material;
2) adding 5.0 weight% or less, relative to the total weight of the composition, of an acidic compound selected from the group of organic acids, boric acid, sulphuric acid, nitric acid, and/or mixtures thereof;
3) adding a nitrification inhibitor, in particular wherein the nitrification inhibitor is 3,4-dimethylpyrazole or a derivative thereof; and
4) optionally, applying a coating that is able to increase at least the water repellence and/or anticaking properties of the solid, particulate ammonium-based composition, wherein the coating comprises a wax, an phosphate ester and an amine.;
wherein the steps 2), 3) and 4) can be interchanged or wherein steps 2), 3) and 4) can be performed simultaneously, for example as the addition of a liquid anticaking and/or moisture repellent coating composition comprising the nitrification inhibitor and the acidic compound.

In one embodiment, the ammonium-based material is a solid, particulate ammonium-based fertilizer composition and the acidic compound and nitrification inhibitor are added as a coating to the fertilizer composition.

In one embodiment, the ammonium-based material is a solid, particulate ammonium-based fertilizer composition and the acidic compound and nitrification inhibitor are pre-mixed in a liquid composition, in particular an oil-based composition, and then added as a coating to the fertilizer composition.

In one embodiment, the ammonium-based material is an ammonium-based melt and the acidic compound and inhibitor are added, simultaneously or sequentially, in the melt either in solid particulate form or as a liquid composition, such as an aqueous solution or suspension or an oil-based composition, or an organic solvent-based liquid composition.

In another aspect, the present disclosure provides a kit of parts, comprising
a) an acidic compound selected from the group of organic acids, boric acid, sulphuric acid, nitric acid, and/or mixtures thereof;
b) a nitrification inhibitor, in particular wherein the nitrification inhibitor is 3,4-dimethylpyrazole or a derivative thereof, more in particular wherein the nitrification inhibitor is DMPP or DMPSA;
c) optionally, an anticaking and/or moisture repellent component comprising a wax, a phosphate ester, and an amine.

The components of such kit of parts can then be added to a solid particulate ammonium-based material in a desired amount to obtain the solid, particulate, ammonium-based composition comprising an ammonium salt and a nitrification inhibitor according to the invention.

According to one embodiment, the components of the kit of parts are provided in separate units. According to another embodiment, the components are premixed and provided in a combined unit. In one embodiment, they are premixed in a weight ratio of nitrification inhibitor to the acidic compound of 1:20 to 10:1, preferably 1:15 to 5:1, more preferably 1:10 to 2:1. In one embodiment, the kit of parts is provided as an oil-based composition.

Finally, the invention concerns a method for improving the stability of a nitrification inhibitor, in particular 3,4-dimethylpyrazole or a derivative thereof, in an ammonium-based composition comprising an ammonium salt and the nitrification inhibitor, by one or more of the following measures:
a) addition to the composition of 5.0 weight% or less, relative to the total weight of the composition, of an acidic compound selected from the group of organic acids, boric acid, sulphuric acid, nitric acid, and/or mixtures thereof; or
b) application of an anticaking and/or moisture repellent coating comprising a wax, a phosphate ester and an amine onto a particulate ammonium-based core particle comprising said nitrification inhibitor.

Detailed embodiments have been discussed herein above and in the following examples.

The preferred embodiments of the method according to the invention will now be illustrated by means of the following non-limitative examples.

### EXAMPLE 1

NPK particles containing 12 weight% of nitrogen, 11 weight% of phosphorus and 18 weight% of potassium were placed in a coating drum and 500 ppm of both 3,4-dimethylpyrazole phosphate (DMPP) powder and citric acid powder were added to the drum. The drum was rotated for 10 min and the coated particles were obtained. Another batch of identical NPK particles were coated according to the same method with DMPP only. The amount of DMPP on the particles was measured by HPLC and used as reference. The particles were stored at ambient temperature and humidity for 12 weeks and the DMPP content of both batches was measured again. The particles coated only with DMPP had 55% of the original amount of DMPP left, whereas the particles coated with DMPP and citric acid had 75% of the original amount left (see Figure 1). Citric acid is clearly increasing the stability of DMPP.

### EXAMPLE 2

AN particles containing 27 weight% of nitrogen (13.5 weight% of nitrogen as ammonium and 13.5 weight% of nitrogen as nitrate), and dolomite were placed in a coating drum and 1300 ppm of 3,4-dimethylpyrazole phosphate (DMPP) powder was added to the drum. The drum was rotated for 10 min and the coated particles were obtained. Some of the material was further coated with a coating agent comprising a petroleum wax (80 to 90 weight%), an alkyl phosphate ester (5 to 9 weight%) and a mixtures of alkyl amines (5 to 10 weight%). The two batches particles were stored at ambient temperature and humidity for 12 weeks. The amount of DMPP was measured at the start and end of the storage. The particles only coated with DMPP had 61% of the original amount of DMPP left, whereas the particles coated with the coating agent had still 100% of the original amount of DMPP (see figure 2).

## Claims

1. A solid, particulate, ammonium-based composition comprising an ammonium salt and a nitrification inhibitor, wherein the ammonium-based composition is further **characterized in that** one or more of the following measures applies :
a) it comprises 5.0 weight% or less, relative to the total weight of the composition, of an acidic compound selected from the group consisting of organic acids, boric acid, sulphuric acid, nitric acid, and/or mixtures thereof;
b) an anticaking and/or moisture repellent coating comprising a wax, a phosphate ester and an amine is applied onto the ammonium-based composition.

2. The ammonium-based composition according to claim 1, wherein:
a) it comprises 5.0 weight% or less, relative to the total weight of the composition, of an acidic compound selected from the group of organic acids, boric acid, sulphuric acid, nitric acid, and/or mixtures thereof; and
b) an anticaking and/or moisture repellent coating comprising a wax, a phosphate ester and an amine.

3. The ammonium-based composition according to claim 1 or 2, wherein the nitrification inhibitor is 3,4-dimethylpyrazole or a derivative thereof, such as 3,4-dimethylpyrazol phosphate (DMPP) or 3,4-dimethylpyrazole-succinic acid (DMPSA).

4. The ammonium-based composition according to any one of claims 1 to 3, wherein the nitrification inhibitor, in particular 3,4dimethylpyrazole or a derivative thereof, is present at a level of 0.0001-1.0 weight%, in particular 0.02-0.5 weight%, more in particular 0.04-0.2 weight%, with weight% relative to the total weight of the composition.

5. The ammonium-based composition according to any one of claims 1 to 4, wherein the acidic compound is selected from the group of organic acids boric acid, sulphuric acid, nitric acid, and mixtures thereof, with the organic acids comprising a carboxylic group functional group, such as citric acid, isocitric acid, aconitic acid, propane-1,2,3-tricarboxylic acid, tartaric acid, malic acid, maleic acid, and fumaric acid.

6. The ammonium-based composition according to any one of claims 1 to 5, wherein the acidic compound is present in the composition at a level of 0.01 to 5.0 weight%, in particular of 0.02 to 1.0 weight%, more in particular of 0.05 to 1.0 weight%, with weight% relative to the total weight of the composition.

7. The ammonium-based composition according to any one of claims 1 to 6, wherein the weight ratio of nitrification inhibitor to the acidic compound ranges from 1:20 to 10:1, in particular from 1:15 to 5:1, more in particular from 1:10 to 2:1.

8. The ammonium-based composition according to any one of claims 1 to 7, wherein the ammonium-based composition comprises 50 to 90 weight% of an ammonium salt, with weight% relative to the total weight of the composition.

9. The ammonium-based composition according to any one of claims 1 to 8, wherein the ammonium salt is selected from the group of ammonium nitrate, ammonium phosphate, ammonium sulphate and/or mixtures thereof.

10. The ammonium-based composition according to any one of claims 1 to 9, wherein the ammonium-based composition comprises a potassium salt.

11. The ammonium-based composition according to any one of claims 1 to 10, wherein the ammonium-based composition comprises an inorganic filler, in particular a calcium-containing inorganic filler, such as dolomite, gypsum, lime, limestone and/or mixtures thereof.

12. Use of the solid, particulate ammonium-based composition as claimed in anyone of claims 1 to 11 as a fertilizer.

13. A method for the manufacture of a solid, particulate ammonium-based composition according to any one of claims 1 to 11, the method comprising the steps of:
1) providing an ammonium-base material;
2) adding 5.0 weight% or less, relative to the total weight of the composition, of an acidic compound selected from the group of organic acids, boric acid, sulphuric acid, nitric acid, and/or mixtures thereof;
3) adding a nitrification inhibitor in solid particulate or liquid form, in particular wherein the nitrification inhibitor is 3,4-dimethylpyrazole or a derivative thereof, such as DMPP or DMPSA; and
4) optionally, applying a water repellent and/or anticaking coating comprising a wax, a phosphate ester and an amine;
wherein the steps 2), 3) and 4) can be interchanged or wherein steps 2), 3) and 4) can be performed simultaneously.

14. A kit of parts, comprising
a) an acidic compound selected from the group of organic acids, boric acid, sulphuric acid, nitric acid, and/or mixtures thereof;
b) a nitrification inhibitor in solid particulate or liquid form, in particular wherein the nitrification inhibitor is 3,4-dimethylpyrazole or a derivative thereof, such as DMPP or DMPSA;
c) optionally, an anticaking and/or moisture repellent component comprising a wax, a phosphate ester and an amine;

15. Method for improving the stability of a nitrification inhibitor, in particular 3,4-dimethylpyrazole or a derivative thereof, such as DMPP or DMPSA, in an ammonium-based composition comprising an ammonium salt and the nitrification inhibitor, by one or more of the following measures :
a) addition to the composition of 5 weight% or less, relative to the total weight of the composition, of an acidic compound selected from the group of organic acids, boric acid, sulphuric acid, nitric acid, and/or mixtures thereof; or
b) application of an anticaking and/or moisture repellent coating comprising a wax, an phosphate ester and an amine, onto the particulate ammonium-based material.
